# EUROPÄISCHE PATENTSCHRIFT

(11) **EP 0 966 504 B1**
(45) Veröffentlichungstag und Bekanntmachung des Hinweises auf die Patenterteilung: **23.11.2005**
(21) Anmeldenummer: 98912444.1
(22) Anmeldetag: 05.03.1998
(51) Int. Cl.: C09D 5/22, G06K 19/14

(54) **NICHT-GRÜNER ANTI-STOKES-LEUCHTSTOFF**
NON-GREEN ANTI-STOKES LUMINESCENT SUBSTANCE
SUBSTANCE LUMINESCENTE NON VERTE ANTI-STOKES

(30) Priorität: 05.03.1997 DE 19708959
(43) Veröffentlichungstag der Anmeldung: 29.12.1999
(73) Patentinhaber: Honeywell Specialty Chemicals Seelze GmbH, 30926 Seelze (DE)
(72) Erfinder: WIECZORECK, Jürgen, D-30823 Garbsen (DE); SIGGEL, Alfred, D-30926 Seelze (DE); FISCHBECK, Uwe, D-31553 Sachsenhagen (DE)
(74) Vertreter: Bublak, Wolfgang
(86) Internationale Anmeldenummer: PCT/EP1998/001258
(87) Internationale Veröffentlichungsnummer: WO 1998/039392

(56) Entgegenhaltungen:
- GB-A- 2 258 659
- GB-A- 2 258 660
- DATABASE WPI Section Ch, Week 7502 Derwent Publications Ltd., London, GB; Class L03, AN 75-02850W XP002068057 & JP 49 045 990 B (TOKYO SHIBAURA ELECTRIC CO)

## Beschreibung

Die vorliegende Erfindung betrifft einen nicht-grünen Anti-Stokes-Leuchtstoff, ein Verfahren zu dessen Herstellung sowie dessen Verwendung.

Leuchtstoffe, die in der Lage sind, bei Anregung mit Infrarot (IR)-Strahlung im Bereich des sichtbaren Lichts zu emittieren, sind bekannt und werden beispielsweise in IR-Sensorkarten zum Nachweis und zur Positionierung von IR-Lasern verwendet. Diese Materialien emittieren je nach Zusammensetzung der Wirtsgitter und der verwendeten Dotierungen für kurze Zeit rotes, grünes oder blaugrünes Licht bei Stimulierung mit IR-Strahlung. Nachteilig bei diesen Materialien ist die Tatsache, daß mit der IR-Strahlung nur eine zuvor - beispielsweise durch Anregung mit sichtbarem Licht - gespeicherte Energie ausgelesen wird. Für eine IR-Detektion ist daher jeweils zunächst eine Aufladung der Materialien notwendig. Während einer kontinuierlichen IR-Stimulierung wird sich zudem die gespeicherte Energie erschöpfen, so daß die Emission sichtbaren Lichts bereits nach kürzester Zeit abnimmt und schließlich zu Ende kommt. Eine kontinuierliche Emission von sichtbarem Licht unter IR-Strahlung ist mit diesen IR-stimulierbaren Materialien somit nicht möglich. Derartige Leuchtstoffe auf Basis von ZnS:Cu,Co; Ca:Sm,Ce oder SrS:Sm,Ce werden z.B. in Ullmann's Encyclopedia of Industrial Chemistry, Bd. A15, "Luminescent Materials", 1990 beschrieben.

Andererseits sind Infrared-to-visible Up-Conversion Materialien, sogenannte Anti-Stokes-Leuchtstoffe, bekannt, die ohne eine vorherige Aufladung IR-Strahlung in sichtbares Licht umwandeln. Diese Materialien nutzen die Multiphotonenanregung von Wirtsgittern mit Dotierungen aus der Gruppe der Seltenerdmetalle, insbesondere von Erbium in Kombination mit Ytterbium, um aus mehreren energiearmen, infraroten Photonen energiereichere Photonen und damit sichtbares Licht zu generieren. Bekannt sind Materialien auf der Basis von Fluoriden, wie z.B. das von H. Kuroda et al., J. Phys. Soc. Jpn., Bd. 33, 1, S. 125 - 141 (1972) beschriebene YF₃: Er, Yb. Nachteilig bei diesen Wirtsgittern sind die oft schwierige Herstellung unter Sauerstoffausschluß und die je nach der Zusammensetzung des Wirtsgitters vorhandene Tendenz zur Instabilität bei der praktischen Anwendung, z.B. bei der Anwendung bei höheren Temperaturen.

Günstiger sind beispielsweise Leuchtstoffe der stöchiometrischen Zusammensetzung YₗYbₘErₙO₂S mit (l + m + n) = 2. Derartige Leuchtstoffe bzw. ganz allgemein Oxisulfide der allgemeinen Zusammensetzung Ln₂O₂S, wobei Ln für die Elemente Y, Gd, Sc und/oder La steht, die mit Ytterbium und Erbium dotiert sind, besitzen eine gute Stabilität gegen organische Lösungsmittel, Alkalien, Heißwasser, Hitze und Luftfeuchtigkeit und werden auch von Säuren nur langsam aufgelöst. Derartige Leuchtstoffe auf der Basis von Wirtsgittern der stöchiometrischen Zusammensetzung LnₗYbₘErₙO₂S mit (l + m + n) = 2, d.h. einem Verhältnis von Seltenerdmetallen zu Sauerstoff zu Schwefel von 2:2:1 werden üblicherweise durch Umsetzung der Seltenerdmetalloxide mit Alkalicarbonat und Schwefel hergestellt. Beim Erhitzen treten dabei Reaktionen auf, bei denen Alkalipolysulfide entstehen, die in-situ oder auch erst bei Erreichen der Maximaltemperatur sulfurierend auf die Oxide der Seltenerdmetalle einwirken und zur Bildung der Oxisulfide führen. Darüber hinaus verbleiben im Reaktionsgemisch nur in Wasser lösliche Verbindungen, so daß das Reaktionsgut unter Anwendung bekannter Verfahrensmaßnahmen wie Auslaugen und Erhitzen mit Wasser, Waschen mit Säure oder Lauge, Desagglomerierung oder Vermahlen, z.B. in einer Kugelmühle, nachträglich beim Erhitzen auf höhere Temperaturen zur Verringerung des Anteils an Kristalleffekten in das gewünschte Oxisulfid mit der oben definierten stöchiometrischen Zusammensetzung überführt werden kann.

Bei der Herstellung derartiger Oxisulfide wird der Anteil an Polysulfid - wie beispielsweise in der österreichischen Patentschrift 286 468 beschrieben - so eingestellt, daß die Polysulfidmenge größer ist als die Menge, die notwendig ist, um alle Oxide in Oxisulfide umzusetzen. Das Verhältnis von Seltenerdmetallen zu Natriumcarbonat zu Schwefel wird so eingestellt, daß, wie beispielsweise in der europäischen Patentanmeldung EP-A 0 410 350 beschrieben, phasenreine Produkte mit der obengenannten stöchiometrischen Zusammensetzung der Oxisulfide resultieren. Gemäß der Patentschrift 286 468 entstehen Leuchtstoffe der Formel
M'₍₂₋ₓ₎M"ₓO₂S, wobei M' mindestens ein Element aus der Gruppe bestehend aus Y, Gd und La ist, M" mindestens ein Element aus der Gruppe der Lanthanoiden mit einer Ordnungszahl zwischen 57 und 64 oder zwischen 64 und 71 darstellt, und x eine Zahl kleiner als 0,2 und größer als 0,0002 ist. Beispielshaft werden in dieser Anmeldung als Seltenerdmetalle Kombinationen aus Y und Tb, Y und Eu, La und Eu, Y und Er beschrieben, die im Falle der Kombination Y oder La und Eu rot aufleuchten und für Y und Er und Y und Tb grün lumineszierende Leuchtstoffe darstellen.

Die EP-A 530 807 beschreibt Leuchtstoffe der Formel (Ln_{1-x-y}LaₓLn'_{y})₂O₂S, worin Ln mindestens ein Element ausgewählt aus der Gruppe bestehend aus Y, Gd, Sc und Lu ist, Ln' mindestens ein Element ausgewählt unter Eu, Tb, Sm, Er, Tm, Dy, Ho, Nd und Pr ist, und x und y Werte im Bereich von 0,005 ≤ x ≤ 0,07 und 0,0001 ≤ y ≤ 0,2 darstellen. Als Beispiele werden dort Leuchtstoffe umfassend Y, La und Eu (rot emittierender Leuchtstoff), Gd, La und Tb (grün emittierender Leuchtstoff) sowie ein Leuchtstoff umfassend Y, La und Eu (rot emittierender Leuchtstoff) beschrieben.

In der GB-B 2 258 659 bzw. GB 2 258 660 werden Anti-Stokes-Leuchtstoffe auf der Basis von dotiertem Yttriumoxisulfid beschrieben, die mit 4 bis 50 Gew.-% Er und/oder Yb und 1 bis 50 ppm eines oder mehrerer anderer Lanthanoid-Elemente dotiert sind, beschrieben. Bezüglich dieser Stoffe wird ausgeführt, daß sie eine grüne Lumineszenz aufweisen.

Derartige Materialien werden auch in der DE-OS 21 58 313 beschrieben.

Die oben beschriebenen Materialien besitzen entweder Anti-Stokes-Verhalten und eine grüne Lumineszenz oder eine nicht-grüne Lumineszenz aber kein Anti-Stokes-Verhalten.

Der vorliegenden Erfindung lag in Anbetracht des oben referierten Standes der Technik die Aufgabe zugrunde, einen nicht-grünen Leuchtstoff mit Anti-Stokes-Verhalten bereitzustellen, der nach Standardverfahren in einfacher Weise herstellbar ist und abweichend von der bislang bekannten Lumineszenz eine andersfarbige Lumineszenz aufweist.

Überraschenderweise wurde dabei gefunden, daß es mit dem System Ln-O-S-Er-Yb mit Ln = Y, Gd, Sc oder La möglich ist, Anti-Stokes-Leuchtstoffe zu erhalten, die weitere, nicht-grüne Lumineszenz-Farben unter IR-Anregung aufweisen.

Demgemäß betrifft die vorliegende Erfindung einen nicht-grünen Anti-Stokes-Leuchtstoff, umfassend die Elemente Ln, Erbium (Er) und Ytterbium (Yb), wobei Ln mindestens ein Element darstellt, das ausgewählt wird aus der Gruppe bestehend aus Yttrium (Y), Gadolinium (Gd), Scandium (Sc) und Lanthan (La).

In einer weiteren Ausführungsform stellt die vorliegende Erfindung einen Leuchtstoff bereit, der eine Zusammensetzung LnₓYb_{y}Er_{z}OₐS_{b} umfaßt, wobei Ln wie oben definiert ist, die Summe aus (x + y + z) 2 ergibt, und die Summe aus (a + b) ≤ 3 und b < 1 ist.

Vorzugsweise handelt es sich hierbei um einen Leuchtstoff, der bei einer Anregung durch IR-Strahlung im Wellenlängenbereich von ungefähr 900 bis 1100 eine nicht-grüne Emission aufweist.

Die erfindungsgemäßen Leuchtstoffe können beispielsweise für die Detektion und Positionierung von IR-emittierenden Systemen, wie z.B. Lasern, Laserdioden und LED's eingesetzt werden. Im Vergleich zu anderen, beispielsweise elektrischen IR-Detektionssystemen mit IR-empfindlichen Photodioden bieten IR-anregbare Materialien für diese Anwendung den Vorteil der einfachen, visuellen und kostengünstigen Erkennung von IR-Strahlung.

Durch Kombination mit einer geeigneten Anregungsquelle kann ein solcher Leuchtstoff auch für die Sicherheitscodierung von Produkten und den Nachweis der Originalität von Wert- und Sicherheitsdokumenten dienen. In diesem Zusammenhang ist es wichtig, Materialien und Sicherheitsmerkmale zu verwenden, die sehr schwer zu fälschen und in Kombination mit anderen Sicherheitsmerkmalen produzierbar sind. Neben der einfachen Kontrolle durch jeden Einzelnen ist es auch erwünscht, daß die entsprechenden Sicherheitsmerkmale je nach Sicherheitsstufe im Zweifelsfall auch oder ausschließlich analytisch eindeutig nachzuweisen sind.

Demgemäß betrifft die vorliegende Erfindung auch eine Druckfarbe, die mindestens einen der hierin beschriebenen Leuchtstoffe umfaßt. Eine derartige Druckfarbe kann z.B. bei der Herstellung von Banknoten verwendet werden.

Darüber hinaus betrifft die vorliegende Erfindung einen Gegenstand, z.B. ein Sicherheitsdokument, wie z.B. einen Personalausweis, Reisepaß, einen Führerschein oder eine Benutzungs- oder Einfuhrerlaubnis, eine Banknote, Aktien oder sonstige Wertpapiere, Reise-, Flug- und Lotterietickets, Kreditkarten und Scheckkarten aus Kunststoff, Reise- und Bankcheques, usw., die jeweils den erfindungsgemäßen Leuchtstoff umfassen.

Bezüglich der oben beschriebenen Anwendungen bietet der erfindungsgemäße Leuchtstoff große Vorteile bei der einfachen, raschen, kontaktlosen und preisgünstigen Kontrolle, der maschinellen Lesbarkeit, der Kombinierbarkeit mit anderen Effekten, der gezielten Anregung durch unterschiedliche IR-Wellenlängen und der verschiedenen Lumineszenzfarben bei Anregung mit unterschiedlichen IR-Wellenlängen.

Die erfindungsgemäßen Leuchtstoffe sind weiterhin zur Herstellung von nicht-kopierbaren Farben geeignet und mit verschiedenen Druckverfahren, wie z.B. Stahlstich- und Offset-Druck, verdruckbar, so daß die Möglichkeit der Kombination mit anderen Sicherheitsdruckfarben oder der Kombination mit anderen Sicherheitsmerkmalen gegeben ist.

Der Begriff "nicht-grün", wie er im Rahmen der vorliegenden Anwendung verwendet wird, umfaßt alle Strahlungen, die für einen Beobachter nicht grün erscheinen, wie z.B. weiß, dunkelrot, hellrot, rosa, gelb, orange, sowie Mischfarben dieser Farben.

Dabei ist es für die erfindungsgemäßen Leuchtstoffe charakteristisch, daß sie ein Hauptmaximum der sichtbaren Emission im Bereich von ungefähr 650 bis ungefähr 680 nm, insbesondere bei ungefähr 660 bis ungefähr 670 nm aufweisen.

Dabei zeigen die erfindungsgemäßen Leuchtstoffe im Emissionsspektrum in der Regel sowohl grüne Emissionen im Bereich von ungefähr 530 bis ungefähr 560 nm als auch Emissionen im oben erwähnten roten Wellenlängenbereich auf. Es ist jedoch auch möglich, erfindungsgemäß Leuchtstoffe herzustellen, die überhaupt keine Emissionen im grünen Wellenlängenbereich zeigen.

Im allgemeinen beträgt das Verhältnis der relativen Peakhöhen zwischen der Emission im roten Wellenlängenbereich und der Emission im grünen Wellenlängenbereich 1 (Peakhöhe rot): ungefähr 0,001 bis ungefähr 0,8 (Peakhöhe grün), vorzugsweise bei 1: ungefähr 0,005 bis ungefähr 0,6 und insbesondere bei 1:0,01 bis ungefähr 0,6. Es können jedoch erfindungsgemäß auch Leuchtstoffe erhalten werden, die im grünen Wellenlängenbereich keine Emission zeigen.

Wie oben definiert, umfaßt der erfindungsgemäße Leuchtstoff mindestens ein Element Ln, das ausgewählt wird aus der Gruppe bestehend aus Y, Gd, Sc und La, wobei Y und Gd bevorzugt sind, sowie Erbium und Ytterbium als Aktivatoren.

Die Summe der relativen Anteile der Elemente Ln (x + y + z) beträgt vorzugsweise 2, wobei das Verhältnis x:y:z im allgemeinen im Bereich von ungefähr 1,5 < x < 1,9 : 0,08 < y < 0,3 : 0,08 < z < 0,3, weiter bevorzugt ungefähr 1,6 < x < 1,8 : 0,1 < y < 0,25 : 0,1 < z < 0,25 und insbesondere 1,65 < x < 1,75 : 0,12 < y < 0,2 : 0,12 < z < 0,2 liegt.

Gemäß der oben definierten weiteren Ausführungsform der Erfindung ist es jedoch entscheidend, daß b < 1 ist, wobei vorzugsweise die Werte für b die Relation 0,001 ≤ b ≤ 0,999, weiter bevorzugt die Relation 0,001 ≤ b ≤ 0,9 und insbesondere die Relation 0,01 ≤ b ≤ 0,7 erfüllen.

Wie sich aus obigem ergibt, umfaßt die vorliegende Erfindung auch Leuchtstoffe der oben beschriebenen Art, die nahezu frei von Schwefel sind, wobei diese jedoch eine relativ geringere Helligkeit aufweisen.

In einer weiteren Ausführungsform der vorliegenden Erfindung betrifft diese einen Leuchtstoff, wie oben definiert, der zusätzlich ungefähr 1 ppm bis zu ungefähr 0,1 Gew.-%, vorzugsweise ungefähr 1 bis ungefähr 50 ppm und insbesondere ungefähr 2 bis ungefähr 20 ppm, jeweils bezogen auf die Summe der Seltenerdoxide, mindestens eines weiteren Lanthanoid-Elements umfaßt. Beispielshaft seien als weitere Lanthanoid-Elemente Eu, Tb, Tm, Dy, Nd, Ce, Sm, Pr, Ho und Sm genannt.

Ferner betrifft die vorliegende Erfindung auch ein Verfahren zur Herstellung eines Leuchtstoffs, wie oben definiert, das die folgende Stufe 1 umfaßt:
(I) Sintern einer Mischung enthaltend:
   ein Oxid oder eine unter Sinterbedingungen zersetzbare Verbindung oder ein Gemisch aus zwei oder mehr davon mindestens eines der Elemente La, Y, Gd und Sc,
   ein Oxid, eine unter Sinterbedingungen zersetzbare Verbindung oder ein Gemisch aus zwei oder mehr davon des Elements Yb,
   ein Oxid, eine unter Sinterbedingungen zersetzbare Verbindung oder ein Gemisch aus zwei oder mehr davon des Elements Er, und
   ein Alkalipolysulfid oder ein Erdalkalisulfid oder ein Gemisch aus zwei oder mehr davon,
wobei die Menge des vorhandenen Sulfids oder Polysulfids oder des Gemischs aus zwei oder mehr davon nicht zur Herstellung eines stöchiometrischen Oxisulfids der Zusammensetzung
LnₓYb_{y}Er_{z}OₐS_{b} mit (x + y + z) = 2 und a = 2 und b = 1 ausreicht, sowie einen nicht-grünen Anti-Stokes-Leuchtstoff umfassend die Elemente Ln, Er, Yb, wobei Ln mindestens ein Element darstellt, das ausgewählt wird aus der Gruppe bestehend aus Y, Gd, Sc und La, der erhältlich ist mittels eines Verfahrens, das die folgende Stufe I umfaßt:
(I) Sintern einer Mischung enthaltend:
   ein Oxid oder eine unter Sinterbedingungen zersetzbare Verbindung oder ein Gemisch aus zwei oder mehr davon mindestens eines der Elemente La, Y, Gd und Sc,
   ein Oxid, eine unter Sinterbedingungen zersetzbare Verbindung oder ein Gemisch aus zwei oder mehr davon des Elements Yb,
   ein Oxid, eine unter Sinterbedingungen zersetzbare Verbindung oder ein Gemisch aus zwei oder mehr davon des Elements Er, und
   ein Alkalipolysulfid oder ein Erdalkalisulfid oder ein Gemisch aus zwei oder mehr davon,
wobei die Menge des vorhandenen Sulfids oder Polysulfids oder des Gemischs aus zwei oder mehr davon nicht zur Herstellung eines stöchiometrischen Oxisulfids der Zusammensetzung
LnₓYb_{y}Er_{z}OₐS_{b} mit (x + y + z) = 2 und a = 2 und b = 1 ausreicht.

Vorzugsweise wird im Rahmen des oben definierten Verfahrens das Alkalipolysulfid oder das Erdalkalisulfid oder das Gemisch aus zwei oder mehr davon in-situ während des Sinterns gebildet.
Bei der Durchführung des oben definierten Verfahrens ist es entscheidend, daß die Menge des vorhandenen Sulfids und/oder Polysulfids nicht zur Herstellung eines stöchiometrischen Oxisulfids mit (x + y + z) = 2 und (a + b) = 3 mit a = 2 und b = 1, wobei x, y, z, a und b die oben definierte Bedeutung aufweisen, ausreicht.

Dabei können im Rahmen des erfindungsgemäßen Verfahrens zum einen Alkali- oder Erdalkalisulfide an sich zusammen mit den Oxiden der im erfindungsgemäßen Leuchtstoff vorhandenen Seltenerdmetalle eingesetzt werden, oder diese in Form des Alkalipolysulfids oder des Erdalkalisulfids oder als Gemisch aus zwei oder mehr davon in-situ während des Sinterns beispielsweise durch eine Reaktion zwischen einem Alkali- oder Erdalkalimetallcarbonat, wie z.B. Na₂CO₃, K₂CO₃, MgCO₃, CaCO₃ oder BaCO₃ mit elementarem Schwefel gebildet werden.

Dabei beträgt das Verhältnis (g/g) zwischen der Gesamtmenge der eingesetzten Alkali- und/oder Erdalkalicarbonate und des Schwefels im allgemeinen 1: < 0,6, vorzugsweise 1: ungefähr 0,05 bis ungefähr 0,5, weiter bevorzugt 1: ungefähr 0,1 bis ungefähr 0,4.

Die weiteren Parameter des Herstellungsverfahrens gemäß der vorliegenden Erfindung sind an sich bekannt, und werden beispielsweise in der GB-B 2 258 659 und der GB-B 2 258 660, sowie der DE-OS 21 58 313 beschrieben. Im folgenden sollen nochmals einige Details des erfindungsgemäßen Verfahrens bzw. der im Rahmen dieses Verfahrens vorzugsweise angewendeten Verfahrensbedingungen erläutert werden.

Als Ausgangsverbindungen zur Herstellung des erfindungsgemäßen Leuchtstoffs werden in erster Linie die Oxide, vorzugsweise Yttriumoxid, Ytterbiumoxid und Erbiumoxid, eingesetzt. Darüber hinaus können, wie oben definiert, auch andere zersetzbare Verbindungen der oben definierten Seltenerdmetalle eingesetzt werden, wobei diese die Seltenerdmetalloxide ganz oder teilweise ersetzen können. Zu nennen sind dabei insbesondere die Sulfate und Oxalate der obengenannten Seltenerdmetalle.

Vor der eigentlichen Sinterung werden die Ausgangsverbindungen, gegebenenfalls zusammen mit Wasser und/oder den Alkali- oder Erdalkalimetallverbindungen und/oder Schwefel miteinander vermischt oder vermahlen, wobei hierbei das Feinvermahlen bevorzugt ist. Sofern in Gegenwart von Wasser feinvermahlen wird, wird die dabei erhaltene Aufschlämmung der Seltenerdmetall-Verbindungen gefiltert und die erhaltenen Seltenerdmetall-Verbindungen getrocknet und anschließend gesiebt.

Als Alkali- und/oder Erdalkalimetallverbindungen können prinzipiell alle Verbindungen des obigen Typs eingesetzt werden, die in der Lage sind, in Gegenwart von elementarem Schwefel und/oder einem Seltenerdmetallsulfat bei der Sinterung ein (Poly)sulfid zu bilden. Als bevorzugte Komponente wird dabei Natriumcarbonat eingesetzt, das in ausgezeichneter Weise in der Lage ist, zusammen mit elementarem Schwefel Natriumpolysulfid zu bilden, wobei dieses anschließend mit den verwendeten Seltenerdmetall-Verbindungen, vorzugsweise -oxiden, unter Bildung der erfindungsgemäßen Leuchtstoffe reagiert.

Als alternative oder weitere Reaktionskomponenten können eingesetzt werden:

Andere Natriumverbindungen, wie z.B. Natriumhydroxid, Natriumoxid, Natriumacetat, Natriumsulfid oder Natriumsulfit, Gemische davon oder Hydroxide, Oxide, Acetate, Sulfide oder Sulfite anderer Alkalimetalle, wie z.B. Kalium oder Lithium, oder von Erdalkalimetallen, wie z.B. Magnesium, Barium oder Calcium. Die obengenannten Verbindungen können selbstverständlich auch als Gemisch aus zwei mehr davon eingesetzt werden.

Darüber hinaus können der Mischung, die anschließend gesintert wird, auch Fluoride, wie z.B. Natrium-, Kalium- oder Ammoniumfluorid, beigemischt werden, wobei experimentelle Befunde gezeigt haben, daß Leuchtstoffe, die in Gegenwart eines derartigen Fluorids gesintert wurden, eine hellere und damit intensitätsstärkere Emission an sichtbarem Licht aufweisen.

Als weitere Zusatzstoffe können u. a. zur Steuerung der erhaltenen Teilchengröße des Leuchtstoffs insbesondere Zusätze eines Alkalimetall- oder Erdalkalimetallphosphats, eines Alkalimetall- oder Erdalkalimetallborats oder einer Verbindung, die unter Reaktionsbedingungen ein entsprechendes Phosphat oder Borat bildet, oder Gemische aus zwei oder mehr davon zugesetzt werden. Wie in den Beispielen 25 bis 28 später gezeigt werden wird, haben sowohl diese Zusätze als auch die Sintertemperatur und die Dauer des Sinterungsprozesses einen Einfluß auf die mittlere Korngröße des erhaltenen Leuchtstoffs.

Dabei ist im vorliegenden Fall zu beachten, daß die mittlere Teilchengröße der erfindungsgemäßen Leuchtstoffe bei ungefähr 50 µm oder darunter, vorzugsweise 30 µm oder darunter, weiter bevorzugt 20 µm oder darunter und insbesondere 10 µm oder darunter beträgt, wobei die Untergrenze für die mittlere Korngröße im allgemeinen bei 0,2 µm, vorzugsweise bei 1,0 µm liegt.

Bezüglich der Gestalt der erhaltenen Leuchtstoff-Teilchen existieren keinerlei Beschränkungen, d.h. sie können in Form von Nadeln, Plättchen, Doppelpyramiden, Octaedern, Tetraedern, Prismen und als kugelförmige Teilchen vorliegen, wobei kugelförmige Teilchen, Doppelpyramiden und Octaeder bevorzugt sind.

Bezüglich der Sinterungszeit bestehen prinzipiell keine Beschränkungen, solange diese Zeit zur Bildung eines Anti-Stoke-Materials aus der erfindungsgemäß eingesetzten Mischung ausreichend ist. Im allgemeinen liegt die Reaktionszeit zwischen 10 Minuten und ungefähr 10 Stunden, vorzugsweise zwischen ungefähr 0,5 bis ungefähr 6 Stunden, weiter bevorzugt bei ungefähr 2 bis ungefähr 4 Stunden.

Die Sinterungstemperatur liegt selbstverständlich oberhalb der Reaktionstemperatur der eingesetzten Mischungen. Sie beträgt im allgemeinen zwischen ungefähr 800 und ungefähr 1.500 °C, vorzugsweise zwischen ungefähr 900 und ungefähr 1.300 °C und insbesondere zwischen ungefähr 1.000 und ungefähr 1.200 °C.

Neben den bereits oben erwähnten Verwendungen kann der erfindungsgemäße Leuchtstoff insbesondere als Bestandteil einer Druckfarbe eingesetzt werden. Für diese Anwendung liegt die mittlere Teilchengröße des erfindungsgemäßen Leuchtstoffs bei 30 µm oder darunter, vorzugsweise zwischen ungefähr 2 µm und ungefähr 30 µm.

Demgemäß betrifft die vorliegende Erfindung auch eine Druckfarbe, die den oben definierten Leuchtstoff umfaßt. Die erfindungsgemäße Druckfarbe umfaßt ferner herkömmliche Komponenten, wie z.B. einen Farbstoff oder ein Vehikel. Beispielsweise kann die Druckfarbe durch inniges Vermischen eines Extenders, eines Wachses, des Leuchtstoffs und weiterer Additive, wie z.B. eines Glanzmittels, Verlaufmittels und Antioxidationsmittels oder Gemischen aus zwei oder mehr davon zusammen mit harzartigen Komponenten, dem obengenannten Vehikel zu nennen sind, und einem Lösungsmittel, wie z.B. einem Kohlenwasserstoff oder einem wäßrigen Medium, innig vermischt und anschließend dispergiert werden.

Für die Anwendung der erfindungsgemäßen Materialien ist vorzugsweise eine flächenhafte Applikation auf einem Substrat notwendig. Diese Applikation kann durch verschiedene Aufbringverfahren, wie z.B. Elektrophorese, Photolithographie, Auftragung in einem Bindemittel oder Primer, vorzugsweise jedoch durch unterschiedliche Drucktechniken, wie z.B. Siebdruck, Flachdruck, Stahlstich-Tiefdruck oder Offsetdruck, geschehen.

Der Gegenstand, insbesondere das Sicherheitsdokument gemäß der vorliegenden Erfindung, läßt sich durch Bestrahlung mit IR-Strahlung und der Beobachtung des daraufhin emittierten Lichts im sichtbaren Bereich authentifizieren. Dabei können übliche Bestrahlungsvorrichtungen, wie z.B. ein Gaslaser, der im nahen IR-Bereich emittiert, eine Laserdiode oder eine IR-emittierende Diode eingesetzt werden. Dabei ist zur Anregung insbesondere IR-Strahlung in den Wellenlängenbereichen von ungefähr 900 bis ungefähr 1.100 sowie ungefähr 1.500 bis ungefähr 1.600 nm bevorzugt.

Demgemäß betrifft die vorliegende Erfindung auch ein Verfahren zur Authentifizierung eines Gegenstands, wie oben definiert, das umfaßt:
Bestrahlung des Gegenstands mir IR-Strahlung und Beobachten des dabei emittierten Lichts im sichtbaren Bereich.

Die Erfindung soll nunmehr anhand der nachfolgenden Beispiele näher erläutert werden.

Dabei zeigen
Fig. 1 das Anregungs- und Emissionsspektrum des Leuchtstoffs gemäß Beispiel 3,
Fig. 2 das Anregungs- und Emissionsspektrum des Leuchtstoffs gemäß Beispiel 10,
Fig. 3 das Anregungs- und Emissionsspektrum des Leuchtstoffs gemäß Beispiel 12, und
Fig. 4 das Anregungs- und Emissionsspektrum des Leuchtstoffs gemäß Beispiel 19 (Vergleich).

### Beispiele

### Beispiele 1 bis 19

Zunächst wurden im System Y-O-S-Er-Yb die Herstellungsbedingungen für einen Leuchtstoff der Zusammensetzung YₓYb_{y}Er_{z}O₂S_{b} mit (x + y + z = 2) und b < 1 untersucht. Dazu wurden Gemische aus Y₂O₃, Yb₂O₃ und Er₂O₃ in den in Tabelle 1 angegebenen Mengen mit Natriumcarbonat und Schwefel in den in Tabelle 1 aufgeführten Anteilen trocken vermischt und das Verhältnis Natriumcarbonat zu der Summe der Seltenerdmetalloxide dabei von 1,50:1 bis 0,5:1 und das Verhältnis Schwefel zu der Summe der Seltenerdmetalloxide von 1,275:1 bis 0,1:1 variiert. Die Mischungen wurden in einen Aluminiumoxidtiegel gegeben und bei 1.100 °C 3 Stunden lang geglüht. Nach dem Abkühlen auf Raumtemperatur wurden die geglühten Produkte aus dem Tiegel entnommen, in Wasser aufgerührt und mehrfach mit heißem Wasser, verdünnter Salzsäure und Natronlauge gewaschen. Anschließend wurden die erhaltenen Suspensionen durch Vermahlen in einer Kugelmühle desagglomeriert, die Feststoffe durch Filtration vom Wasser abgetrennt und bei 120 °C 10 Stunden lang getrocknet.

Die Ergebnisse sind in Tabelle 1 gezeigt.

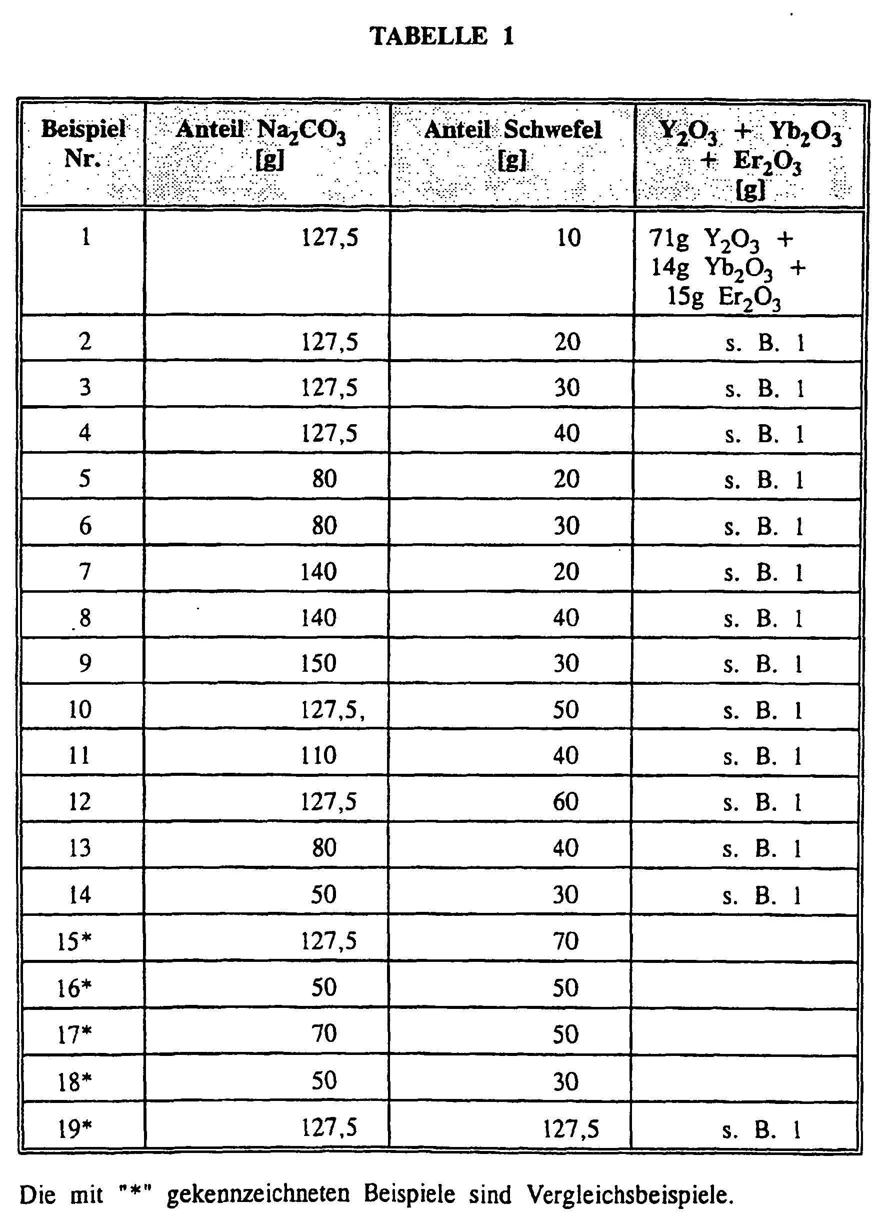

Bei den Leuchtstoffen gemäß den Beispielen 1 bis 9, d.h. unter Bedingungen, die nicht ausreichten, um alle Oxide vollständig in Oxisulfide umzusetzen, handelte es sich um leicht rosafarbene Pulver mit tiefroter Lumineszenzfarbe bei Anregung mit IR-Strahlung.

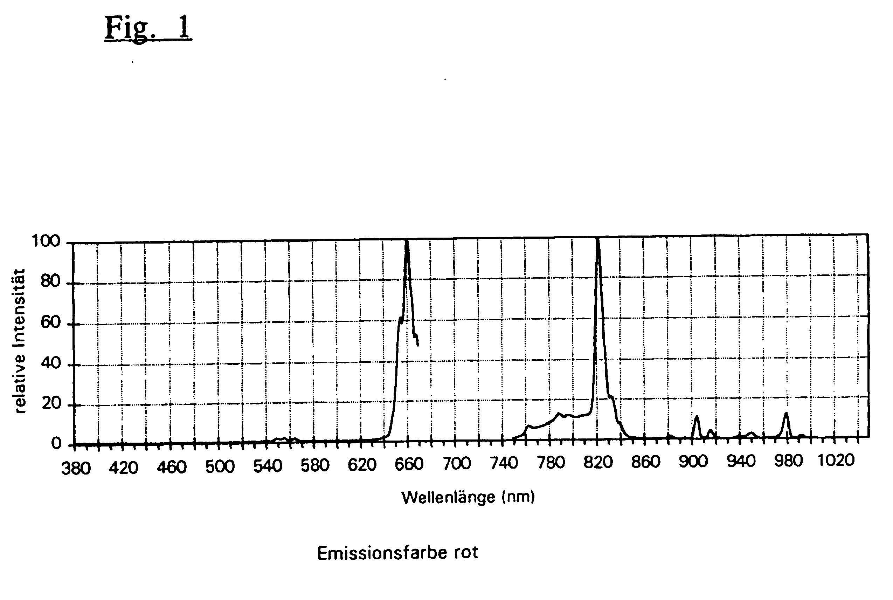

Fig. 1 zeigt das Anregungs- und Emissionsspektrum des Leuchtstoffs gemäß Beispiel 3.

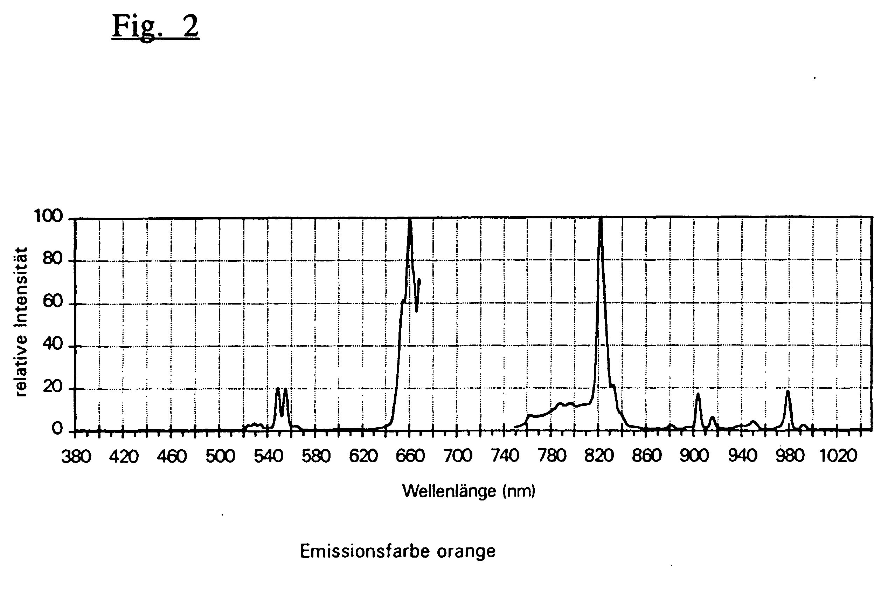

Unter Reaktionsbedingungen, die - verglichen mit Beispielen 1 bis 9 - von höheren Schwefel- oder geringeren Natriumcarbonatanteilen ausgingen, aber nicht ausreichten, um alle Oxide vollständig in Oxisulfide umzusetzen, ergaben sich bei Beispielen 10 und 11 leicht rosafarbene Pulver mit orangefarbener Lumineszenz bei Anregung mit IR-Strahlung. Fig. 2 zeigt das Anregungs- und Emissionsspektrum des Materials gemäß Beispiel 10.

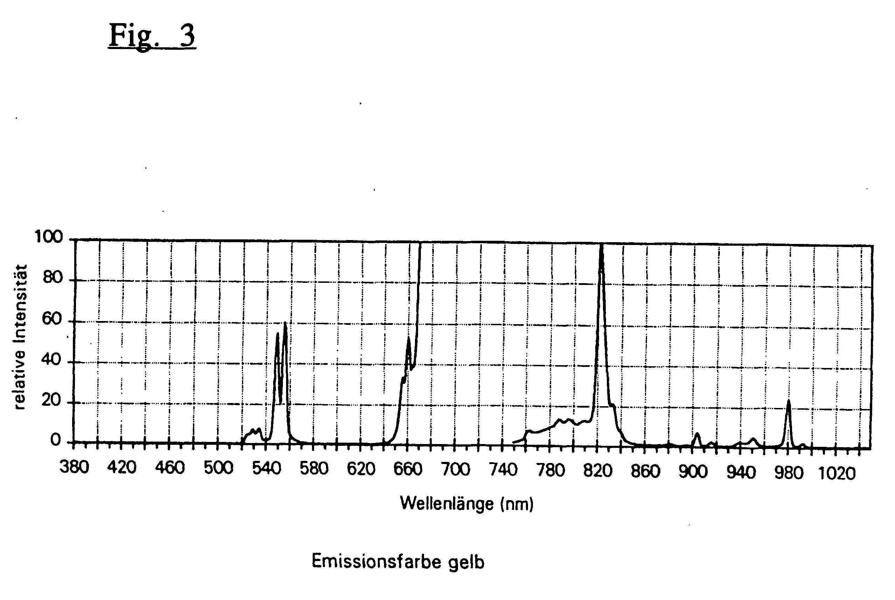

Beispiele 12 bis 14 bei denen noch höhere Schwefel- oder noch geringere Natriumcarbonatanteile eingesetzt wurden, ergaben leicht rosafarbene Pulver mit gelber Lumineszenz bei Anregung mit IR-Strahlung. Fig. 3 zeigt das Anregungs- und Emissionsspektrum des Leuchtstoffs gemäß Beispiel 12.

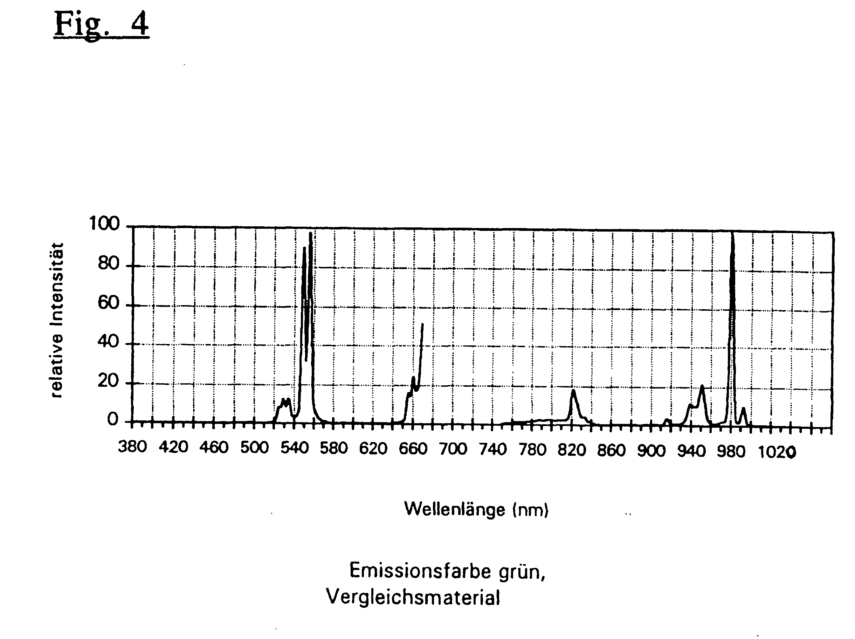

Zu Vergleichszwecken wurden unter - bis auf die in Tabelle 1 aufgeführten Variationen der Mengen an Natriumcarbonat und Schwefel - gleichen Präparationsbedingungen die Leuchtstoffe gemäß Beispielen 15 bis 19 als Vergleichsbeispiele hergestellt. Diese Beispiele ergaben leicht rosafarbene Pulver mit einer grünen Lumineszenz bei Anregung mit IR-Strahlung. Fig. 4 zeigt zur Verdeutlichung des Unterschiedes zu den erfindungsgemäßen Leuchtstoffen das Anregungs- und Emissionsspektrum des Leuchtstoffs gemäß Beispiel 19, der ein Oxisulfid mit stöchiometrischer Zusammensetzung ist.

### Beispiele 20 bis 24

Im Rahmen dieser Beispiele wurde, unter sonst gleichen Reaktionsbedingungen wie bei Beispielen 1 bis 19 anstelle von Natriumcarbonat als Reaktionskomponente die in Tabelle 2 aufgelisteten Alkali- bzw. Erdalkaliverbindungen eingesetzt.

Aus allen Beispielen resultierten leicht rosafarbene Pulver mit einer roten Lumineszenz bei Anregung mit IR-Strahlung.

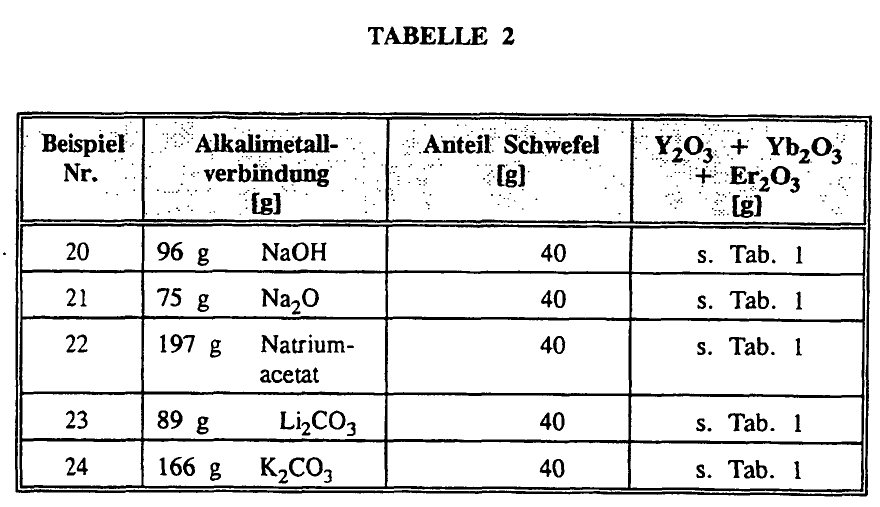

### Beispiele 25 bis 28

Die folgenden Beispiele zeigen den Einfluß eines oder mehrerer Zusatzstoffe sowie der Reaktionstemperatur und -zeit auf die mittlere Korngröße des erhaltenen Leuchtstoffs, wobei in Abhängigkeit von der Art und Menge des Zusatzstoffs und den Verfahrensbedingungen, insbesondere der Sintertemperatur und -zeit, die mittlere Korngröße in signifikanter Weise beeinflußt, d.h. erhöht oder abgesenkt werden kann. Abgesehen von den in Tabelle 3 gezeigten, veränderten Reaktionsparametern wurden diese Beispiel analog dem oben diskutierten Beispiel 3 hergestellt. Alle Beispiele waren leicht rosafarbene Pulver mit roter Lumineszenzfarbe bei Anregung mit IR-Strahlung.

Die in Tabelle 3 gezeigte mittlere Korngröße wurde mittels Laser Dispersionsanalyse bestimmt.

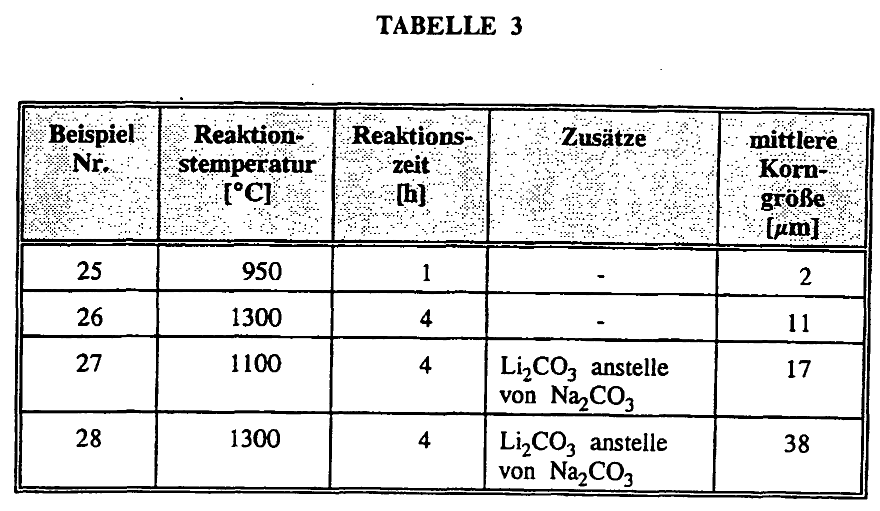

## Patentansprüche

1. Leuchtstoff, umfassend eine Zusammensetzung LnₓYb_{y}Er_{z}OₐS_{b}, wobei Ln mindestens ein Element darstellt, das ausgewählt wird aus der Gruppe bestehend aus Yttrium (Y), Gadolinium (Gd), Scandium (Sc) und Lanthan (La), die Summe aus (x + y + z) 2 ergibt, die Summe aus (a + b) ≤ 3 und b < 1 ist, a ≥ 2 ist und die Werte für b die Relation 0,001 ≤ b ≤ 0,9 erfüllen.

2. Leuchtstoff nach Anspruch 1, der zusätzlich 1 ppm bis 0,1 Gew.% mindestens eines weiteren Lanthanoid-Elements umfasst.

3. Verfahren zur Herstellung eines Leuchtstoffs gemäß Anspruch 1 oder 2, das die folgende Stufe I umfasst:
(I) Sintern einer Mischung enthaltend:
ein Oxid oder eine unter Sinterbedingungen zersetzbare Verbindung oder ein Gemisch aus zwei oder mehr davon mindestens eines der Element La, Y, Gd und Sc,
ein Oxid, eine unter Singerbedingungen zersetzbare Verbindung oder ein Gemisch aus zwei oder mehr davon des Elements Yb,
ein Oxid, eine unter Sinterbedingungen zersetzbare Verbindung oder ein Gemisch aus zwei oder mehr davon des Elements Er, und
ein Alkalipolysulfid oder ein Erdalkalisulfid oder ein Gemisch aus zwei oder mehr davon,
wobei die Menge des vorhanden Sulfids oder Polysulfids oder des Gemischs aus zwei oder mehr davon nicht zur Herstellung eines stöchiometrischen Oxisulfids der Zusammensetzung
LnₓYb_{y}Er_{z}OₐS_{b} mit (x + y + z) = 2 und a = 2 und b = 1 ausreicht.

4. Verfahren nach Anspruch 3, wobei das Alkalipolysulfid oder das Erdalkalisulfid oder das Gemisch aus zwei oder mehr davon in-situ während des Sinterns gebildet wird.

5. Druckfarbe, umfassend einen Leuchtstoff gemäß einem der Ansprüche 1 oder 2 oder ein Gemisch aus zwei oder mehr davon.

6. Gegenstand, umfassend einen Leuchtstoff gemäß einem der Ansprüche 1 oder 2 oder ein Gemisch aus zwei oder mehr davon.

7. Verfahren zur Authentifizierung eines Gegenstands gemäß Anspruch 6, das umfasst:
Bestrahlung des Gegenstands mit IR-Strahlung und Beobachtung der dabei emittierten Strahlung.

## Claims

1. Luminescent material comprising a composition LnₓYb_{y}Er_{z}OₐS_{b}, where Ln represents at least one element which is selected from the group consisting of yttrium (Y), gadolinium (Gd), scandium (Sc) and lanthanum (La) the sum of (x + y + z) is 2 and the sum of (a + b) ≤ 3 and b < 1, a ≥ 2 and the values for b satisfying the relationship 0.001 ≤ b ≤ 0.9.

2. Luminescent material according to claim 1, which is additionally comprises from 1 ppm to 0.1 % by weight of at least one further lanthanoid element.

3. Process for producing a luminescent material according to claim 1 or 2, which comprises the following step I:
(I) sintering a mixture containing
an oxide, or a compound capable of being decomposed under sintering conditions, or a mixture of two or more thereof, of at least one of the elements La, Y, Gd and Sc,
an oxide, a compound capable of being decomposed under sintering conditions, or a mixture of two or more thereof, of the element Yb,
an oxide, a compound capable of being decomposed under sintering conditions, or a mixture of two or more thereof, of the element Er, and
an alkali metal polysulphide or an alkaline earth metal sulphide or a mixture of two or more thereof,
the amount of sulphide or polysulphide present or of the mixture of to our more thereof not being sufficient to produce a stoichiometric oxysulphide of the composition
LnₓYb_{y}Er_{z}OₐS_{b} with (x + y + z) = 2 and a = 2 and b = 1.

4. Process according to claim 3, the alkali metal polysulphide or the alkaline earth metal sulphide or the mixture of two or more thereof being formed in situ during the sintering.

5. Printing ink comprising a luminescent material according to claim 1 or 2 or a mixture of two or more thereof.

6. Object comprising a luminescent material according to claim 1 or 2 or a mixture of two or more thereof.

7. Process for authenticating an object according to claim 6, which comprises:
exposing the object to IR radiation and observing the light then emitted.

## Revendications

1. Substance luminescente comprenant une composition LnₓYb_{y}Er_{z}OₐS_{b}, où Ln représente au moins un élément choisi dans le groupe formé par l'yttrium (Y), le gadolinium (Gd), le scandium (Sc) et le lanthane (La), la somme de (x+y+z) donne 2, la somme de (a+b) est ≤ 3 et b < 1, a est ≥ 2 est la valeur de b vérifie la relation 0,001 ≤ b ≤ 0,9.

2. Substance luminescente selon la revendication 1, comprenant en outre 1 ppm à 0,1 % en poids d'au moins un autre élément lanthanide.

3. Procédé d'obtention d'une substance luminescente selon la revendication 1 ou 2, qui comprend l'étape 1 suivante :
(I) fritter un mélange comprenant :
un oxyde, ou un liant décomposable dans les conditions du frittage ou un mélange de deux ou plus d'entre ceux-ci, d'au moins l'un des éléments La, Y, gd et Sc,
un oxyde, un liant décomposable dans les conditions du frittage ou un mélange de deux ou plus d'entre ceux-ci, de l'élément Yb,
un oxyde, un liant décomposable dans les conditions du frittage ou un mélange de deux ou plus d'entre ceux-ci, de l'élément Er, et
un polysulfure alcalin ou un sulfure alcalino-terreux ou un mélange de deux ou plus d'entre ceux-ci,
où la quantité présente du sulfure, ou du polysulfure, ou du mélange de deux ou plus d'entre ceux-ci, ne suffit pas à l'obtention d'un oxysulfure stoechiométrique de composition LnₓYb_{y}Er_{z}OₐS_{b} avec (x+y+z) = 2 et a = 2 et b = 1.

4. Procédé selon la revendication 3, où le polysulfure alcalin ou le sulfure alcalino-terreux ou le mélange de deux ou plus d'entre ceux-ci, se forme *in situ* lors du frittage.

5. Encre d'imprimerie comprenant une substance luminescente selon l'une des revendications 1 ou 2, ou un mélange de deux ou plus d'entre celles-ci.

6. Objet comprenant une substance luminescente selon l'une des revendications 1 ou 2, ou un mélange de deux ou plus d'entre celles-ci.

7. Procédé d'identification d'un objet selon la revendication 6, qui comprend :
l'illumination de l'objet par un rayonnement IR et l'observation du rayonnement qui en est émis.
